**Europäisches Patentamt**

(19) **European Patent Office**

**Office européen des brevets**

(11) Veröffentlichungsnummer: **0 074 503**
B1

(12) **EUROPÄISCHE PATENTSCHRIFT**

(45) Veröffentlichungstag der Patentschrift:
02.01.85

(51) Int. Cl.³: **C 01 B 25/46**

(21) Anmeldenummer: 82107518.1

(22) Anmeldetag: 18.08.82

(54) Verfahren zur Nachbehandlung von Extraktionsrückständen der Phosphorsäurereinigung.

(30) Priorität: 10.09.81 DE 3135801

(43) Veröffentlichungstag der Anmeldung:
23.03.83 Patentblatt 83/12

(45) Bekanntmachung des Hinweises auf die Patenterteilung:
02.01.85 Patentblatt 85/1

(84) Benannte Vertragsstaaten:
AT BE CH DE FR GB IT LI NL SE

(56) Entgegenhaltungen:
EP - A - 0 017 741
FR - A - 2 374 262

(73) Patentinhaber: HOECHST AKTIENGESELLSCHAFT,
Postfach 80 03 20, D-6230 Frankfurt am Main 80 (DE)

(72) Erfinder: Schimmel, Günther, Dr., Am Beissel 27,
D-5042 Erftstadt (DE)
Erfinder: Gradl, Reinhard, Am Grünen Weg 6,
D-5030 Hürth (DE)
Erfinder: Heymer, Gero, Dr., Fasanenaue 12,
D-5042 Erftstadt (DE)

**0 074 503**

## Beschreibung

Bei der extraktiven Reinigung von Rohphosphorsäure mit organischen Lösemitteln, wie z. B. Alkoholen, Ketonen oder Ethern wird in einer mehrstufigen Gegenstromapparatur die Phosphorsäure in die organische Extraktphase überführt, während die anorganischen Verunreinigungen, wie die Ionen von Eisen, Aluminium, Calcium, Magnesium und in geringen Mengen der Schwermetalle, wie Cadmium, Kupfer, Zink, Nickel und Chrom, in der wäßrigen Raffinatphase zurückbleiben. Da zur Ausbeuteerhöhung größere Mengen Schwefelsäure im Verlaufe der Extraktion zugesetzt werden, enthält das Raffinat — von den Kationen abgesehen — im wesentlichen Schwefelsäure sowie nicht extrahierte Phosphorsäure, wobei i. a. der Gehalt an $H_2SO_4$ deutlich höher als der an $P_2O_5$ ist ($\sim 15$ Gew.-% $SO_4$, $\sim 6$ Gew.-% $P_2O_5$, 3—5 Gew.-% Kationen; vgl. Europäische Patentanmeldung 0 022 477).

Weil diese Lösung aus Gründen des Umweltschutzes nicht ins Abwasser geleitet werden kann, muß sie einer Nachbehandlung unterzogen werden, wobei sich die Neutralisation mit Kalk zu einer gut filtrierbaren, alkalischen Suspension am geeignetsten erweist (Europäische Patentanmeldung 0 017 741). Der dabei entstehende Filterkuchen ist stichfest und erfüllt hinsichtlich seines Elutionsverhaltens die vorgeschriebenen Anforderungen, d. h., er ist deponiefähig.

Das Deponieprodukt besteht zur Hauptsache aus drei Stoffen bzw. Stoffklassen, nämlich Gips ($CaSO_4 \cdot 2\,H_2O$), Calciumphosphate sowie einer Salzfraktion aus Metallhydroxiden, -phosphaten und -sulfaten. Von diesen drei Stofffraktionen ist bei einer üblichen Durchführung der Extraktion der Gips mengenmäßig die stärkste Komponente.

Nun sind diese drei Fraktionen hinsichtlich ihrer Deponierbarkeit und ihres Wertes unterschiedlich einzustufen. Gips stellt eine weitgehend umweltneutrale und wertlose Substanz dar. Die Calciumphosphate dagegen können bei nicht sachgerechter Lagerung zu einer Erhöhung des Phosphatgehaltes im Oberflächenwasser führen. Auf der anderen Seite stellt relativ hochprozentiges Calciumphosphat einen Rohstoff von nicht unbeträchtlichem Wert dar, wenn es gelingt, ihn in ein Phosphatverarbeitungsverfahren einzuspeisen.

Aufgabe der vorliegenden Erfindung war es, ein technisch einfaches Verfahren zu finden, nach dem die bei der Phosphorsäure-Extraktionsreinigung anfallenden schwefel- und phosphorsauren Raffinatrückstände in zwei Feststofffraktionen unterschiedlicher chemischer Zusammensetzung überführt werden können, wobei die eine im wesentlichen aus Gips besteht, der möglichst nicht mehr als 5 Gew.-% $P_2O_5$ enthalten soll. In der anderen Fraktion sollen die restlichen Raffinatinhaltsstoffe, vor allem also $P_2O_5$, bei möglichst geringem Sulfatgehalt enthalten sein.

Überraschenderweise wurde gefunden, daß sich dieses Ziel erreichen läßt, wenn man

a) in den wasserhaltigen, sauren Raffinaten durch Zugabe einer alkalisch reagierenden Calciumverbindung einen pH-Wert von 1,2 bis 2,0, vorzugsweise von 1,4 bis 2,0 einstellt,

b) den dabei anfallenden, im wesentlichen aus Gips bestehenden Niederschlag als erste Feststofffraktion abfiltriert und mit Wasser wäscht,

c) das gewonnene Filtrat mit dem Waschwasser zu einer Mischung vereinigt, in letztere die Calciumverbindung in solchen, vorher ermittelten Mengen einträgt, daß sich nach erfolgter Umsetzung im ausreagierten Filterkuchen ein pH-Wert von 9 bis 12 einstellt — gemessen in einer 10gewichts-%igen wäßrigen Aufschlämmung —, die sich dabei bildende Suspension bereits filtriert, wenn sich ein pH-Wert von 6 bis 8 eingestellt hat und

d) den erhaltenen, im wesentlichen aus Calciumphosphat bestehenden Filterkuchen als zweite Feststofffraktion abtrennt und ausreagieren läßt.

Dabei empfiehlt es sich, die erste Feststofffraktion nach einer Verweilzeit von mindestens 2 Stunden, vorzugsweise von 4 bis 6 Stunden abzufiltrieren, nachdem sie unter Rühren bei erhöhter Temperatur ausreagiert hat, um einen großkristallinen Gips zu erzeugen, der sich gut filtrieren und entwässern läßt. Die zugesetzte Calciummenge und verbunden damit der eingestellte pH-Wert richtet sich nach dem ursprünglich im Raffinat vorliegenden Molverhältnis von $SO_4 : P_2O_5$ und entspricht i. a. einer auf das Sulfat bezogenen unterstöchiometrischen Dosierung.

Den im Schritt b) abfiltrierten Niederschlag schlämmt man vorteilhafterweise mit Wasser auf und wäscht ihn — ebenfalls bei erhöhten Temperaturen von etwa 50—70°C — so lange mit Wasser, bis sein Gehalt an $P_2O_5$ in Trockensubstanz weniger als 5 Gew.-% beträgt. Die angewandte Wassermenge sollte dabei der Hälfte bis dem Zweifachen des Gewichtes des Filterkuchens entsprechen.

Der gewaschene Gips enthält dann je nach der Ausgangszusammensetzung des Raffinats nur noch 2 bis 4 Gew.-% $P_2O_5$ und ist damit als unbedenkliches Deponieprodukt einzustufen.

Für die zweite, die Phosphat-/Schwermetall-Fällungsstufe muß in Vorversuchen die Calciummenge ermittelt werden, die erforderlich ist, damit sich im ausreagierten Filterkuchen ein pH-Wert von 9—12 einstellt, gemessen in einer 10gew.-%igen wäßrigen Aufschlämmung.

Der in der zweiten Fällstufe entstehende Filterkuchen besteht im wesentlichen aus Calciumphosphat sowie anderen Metallhydroxiden, -phosphaten und -sulfaten und kann gegebenenfalls in noch weitere Feststofffraktion aufgeteilt werden. Der $P_2O_5$-Gehalt dieser zweiten Feststofffraktion ($\sim 15—25$ Gew.-%) ist bei gleichzeitig niedrigem Sulfat-Gehalt ($\sim 2—4$ Gew.-%) so hoch, daß sie sich trotz ihres Metall-

2

gehaltes als Phosphatrohstoff verwendet läßt. Dies kann sowohl in einem Phosphorofen als auch als Düngemittel geschehen.

In der Gipsfällungsstufe kann als Fällmittel gebrannter Kalk (CaO), Kalkhydrat (Ca(OH)$_2$) oder auch vorzugsweise granulierte Phosphorofenschlacke, die im wesentlichen aus Calciummetasilikat besteht, erfolgreich eingesetzt werden. Die Phosphorofenschlacke bietet bei etwas erniedrigter Filtrationsleistung den Vorteil einer vollständigeren Entwässerung und besseren Auswaschbarkeit des P$_2$O$_5$ aus dem Filterkuchen. In der Phosphatfällungsstufe dagegen sollte wegen der besseren Filtrierbarkeit sowie des angestrebten hohen pH-Wertes, vorzugsweise CaO oder Ca(OH)$_2$ verwendet werden.

Es war überraschend, daß sich durch eine genaue pH-Wert-Steuerung in der Sulfatfällungsstufe, verbunden mit einer bestimmten Verweilzeit, eine Auftrennung des bei der Phosphorsäure-Extraktionsreinigung anfallenden Raffinats in eine Gipsfraktion, die sehr wenig P$_2$O$_5$ enthält und eine Calciumphosphatfraktion, die sehr wenig Sulfat enthält, erzielen läßt. Eine auf Sulfat bezogene, stöchiometrische Calciumdosierung führt zu einem unbefriedigenden Trennergebnis und ist überdies technisch nur schwer zu realisieren. Ebenso führt eine zu kurze Verweilzeit zu einem unbefriedigenden Trennergebnis. Als weiterer Vorteil ist die gute Filtrierbarkeit in beiden Stufen hervorzuheben, wobei insbesondere auch in der Phosphatfällungsstufe ohne Anwendung besonderer Maßnahmen eine befriedigende Filtrationsleistung erreicht wird. Wichtig ist hier allerdings, daß die Filtration bereits vor dem Ende der Neutralisationsreaktion stattfindet.

In den folgenden Beispielen soll die Erfindung näher erläutert werden, ohne daß die Erfindung auf den Inhalt dieser Beispiele beschränkt sein soll. Die detaillierten Daten von Beispiel 1 bis 6 sind in der angefügten Tabelle aufgeführt. Die Trennfaktoren S stellen ein Maß für die Qualität der Trennung dar und sind folgendermaßen definiert:

$$S = \left(\frac{g\ SO_4}{g\ P_2O_5}\right) \text{ im Gips} \times \left(\frac{g\ P_2O_5}{g\ SO_4}\right) \text{ im Phosphat}$$

### Beispiel 1

#### (Vergleich)

In einem Becherglas werden zu 400 g eines bei der Extraktionsreinigung von marokkanischer Naßphosphorsäure mit Amylalkohol anfallenden Raffinates (7,3 Gew.-% P$_2$O$_5$; 9,8 Gew.-% SO$_4$; 0,03 Gew.-% Ca) unter Rühren bei 80°C 18,0 g CaO (84gew.-%ig) zugegeben, wobei der pH-Wert der Maische 1 beträgt. Anschließend wird noch 5 Stunden gerührt. Bei der Filtration über eine Filternutsche entstehen 347 g Filtrat, das aufbewahrt wird, und 65 g Filterkuchen.

Der Kuchen wird mit 98 g Wasser eine Stunde bei 70°C gerührt und die entstehende Suspension heiß filtriert. Man erhält 100 g Filtrat, das verwahrt wird, und 63 g farblosen, stichfesten Filterkuchen, der nach Trocknung bei 80°C 44,0 g wiegt und 3,1 Gew.-% P$_2$O$_5$ und 53,8 Gew.-% SO$_4$ enthält.

Die beiden Filtrate werden vereinigt und bei 70°C mit 63 g CaO neutralisiert und sofort über eine Filternutsche filtriert. Der pH-Wert in der Maische beträgt 7,6, der des ausreagierten Filterkuchens (als 10gew.-%ige Aufschlämmung) 9,5. Man erhält 224 g Filtrat und 280 g stichfesten Filterkuchen, der nach dem Trocknen bei 80°C noch 108 g wiegt und 26,2 Gew.-% P$_2$O$_5$ und 15 Gew.-% SO$_4$ enthält; der Trennfaktor S beträgt 30,4.

### Beispiel 2

#### (erfindungsgemäß)

In Abänderung von Beispiel 1 werden 25,6 g CaO im Rahmen der Gipsfällung eingesetzt, woraus in der Maische ein pH-Wert von 1,5 resultiert. Der getrocknete Gips enthält nur 3,8 Gew.-% P$_2$O$_5$, der Phosphatfilterkuchen nur 2,0 Gew.-% SO$_4$, Trennfaktor S = 159,5.

### Beispiel 3

#### (erfindungsgemäß)

In Abänderung von Beispiel 2 wird statt gebranntem Kalk eine granulierte Phosphorofenschlacke (Calciummetasilikat mit 49,2 Gew.-% CaO und 43,0 Gew.-% SiO$_2$) verwendet. Der pH-Wert der Gipsmaische wird wieder auf 1,5 eingestellt. Das getrocknete Gemisch aus Gips und SiO$_2$ enthält 3,2 Gew.-% P$_2$O$_5$. In der zweiten Fällstufe wird mit CaO neutralisiert und wiederum sofort filtriert. Der getrocknete Filterkuchen enthält nur 1,8 Gew.-% SO$_4$, der S-Wert beträgt 140,3.

### Beispiel 4

### (Vergleich)

In Abänderung von Beispiel 1 bis 3 wird ein Raffinat mit 6,3 Gew.-% $P_2O_5$ und 20,1 Gew.-% $SO_4$ verwendet. Man neutralisiert mit CaO bis pH 2,2 und rührt 2 Stunden bei 80°C. Der getrocknete Gips enthält 6,5 Gew.-% $P_2O_5$. Der Trennfaktor S beträgt 41,3.

### Beispiel 5

### (Vergleich)

In Abänderung von Beispiel 4 wird mit CaO nur bis pH 0,6 neutralisiert und 5 Stunden bei 80°C gerührt. Das Filtrat der Gipsfällungsstufe enthält noch 4,1 Gew.-% $SO_4$. Dementsprechend weist zwar der getrocknete Gips nur einen Gehalt von 3,6 Gew.-% $P_2O_5$ auf, jedoch reichert sich das Sulfat im getrockneten Phosphatfilterkuchen auf 8,7 Gew.-% an; der S-Wert liegt dadurch mit 28,7 sehr niedrig.

### Beispiel 6

### (erfindungsgemäß)

In Abänderung von Beispiel 5 wird mit CaO bis zu einem pH-Wert von 1,8 neutralisiert. Die Trennwirkung ist gut, beide Fällungsfraktionen weisen eine befriedigende Reinheit auf: Der Gips enthält 3,2 Gew.-% $P_2O_5$, der Phosphatfilterkuchen 2,5 Gew.-% $SO_4$, der Trennfaktor S beträgt 132,8.

| Bei-spiel | Gipsfällung | | | | | Kuchenwäsche | | | Gips trocken | | |
|---|---|---|---|---|---|---|---|---|---|---|---|
| | Menge CaO (84%) | pH | Menge in g | | | Menge in g | | | Menge in g | % $P_2O_5$ | % $SO_4$ |
| | | | Filtrat | Kuchen | $H_2O$ | Filtrat | Kuchen | | | | |
| 1 | 18,0 | 1,0 | 347 | 65 | 98 | 100 | 63 | | 44 | 3,1 | 53,8 |
| 2 | 25,6 | 1,5 | 228 | 192 | 192 | 210 | 170 | | 71 | 3,8 | 52,5 |
| 3 | 46,1*) | 1,5 | 282 | 158 | 158 | 170 | 144 | | 86 | 3,2 | 42,3 |
| 4 | 58,8 | 2,2 | 143 | 312 | 312 | 314 | 297 | | 161 | 6,5 | 48,2 |
| 5 | 49,0 | 0,6 | 142 | 295 | 295 | 306 | 276 | | 152 | 3,6 | 47,3 |
| 6 | 53,6 | 1,8 | 230 | 222 | 333 | 330 | 223 | | 137 | 3,2 | 56,8 |

*) Mit Phosphorofenschlacke.

| Phosphatfällung | | | | Phosphatkuchen trocken | | | S |
|---|---|---|---|---|---|---|---|
| Menge CaO | pH | Menge in g | | Menge in g | % $P_2O_5$ | % $SO_4$ | |
| | Maische | Kuchen | Filtrat | Kuchen | | | |
| 63,0 | 7,6 | 9,5 | 224 | 280 | 108 | 26,2 | 15,0 | 30,4 |
| 62,0 | 8,0 | 9,4 | 212 | 284 | 114 | 23,1 | 2,0 | 159,5 |
| 81,0 | 8,5 | 11,6 | 158 | 376 | 141 | 19,1 | 1,8 | 140,3 |

Fortsetzung

| Phosphatfällung | | | | | Phosphatkuchen trocken | | | S |
|---|---|---|---|---|---|---|---|---|
| Menge CaO | pH | | Menge in g | | Menge in g | % P$_2$O$_5$ | % SO$_4$ | |
| | Maische | Kuchen | Filtrat | Kuchen | | | | |
| 60,0 | 8,0 | 11,4 | 306 | 204 | 95 | 15,6 | 2,8 | 41,3 |
| 55,0 | 8,0 | 11,4 | 289 | 211 | 105 | 19,0 | 8,7 | 28,7 |
| 57,0 | 7,9 | 11,3 | 390 | 223 | 110 | 18,7 | 2,5 | 132,8 |

**Patentansprüche**

1. Verfahren zur Nachbehandlung von Raffinate genannten, schwefelsauren Extraktionsrückständen, die bei der extraktiven Reinigung roher Phosphorsäure mit Hilfe organischer Lösungsmittel in Gegenwart von Schwefelsäure anfallen, durch Umsetzung dieser Raffinate mit alkalisch reagierenden Calciumverbindungen, dadurch gekennzeichnet, daß man aus den Raffinaten zwei getrennte Feststofffraktionen chemisch unterschiedlicher Zusammensetzung herstellt, indem man

a)   in den wasserhaltigen Raffinaten durch Zugabe der Calciumverbindung einen pH-Wert von 1,2 bis 2,0 einstellt;
b)   den dabei anfallenden, im wesentlichen aus Gips bestehenden Niederschlag als erste Feststofffraktion abfiltriert und mit Wasser wäscht;
c)   das gewonnene Filtrat mit dem anfallenden Waschwasser zu einer Mischung vereinigt, in letztere die Calciumverbindung in solchen, vorher ermittelten Mengen einträgt, daß sich nach erfolgter Umsetzung im ausreagierten Filterkuchen ein pH-Wert von 9 bis 12 einstellt, gemessen in einer 10gewichtsprozentigen wäßrigen Aufschlämmung, die sich dabei bildende Suspension bereits filtriert, wenn sich ein pH-Wert von 6 bis 8 eingestellt hat und
d)   den erhaltenen im wesentlichen aus Calciumphosphat bestehenden Filterkuchen als zweite Feststofffraktion abtrennt und ausreagieren läßt.

2. Verfahren nach Anspruch 1, dadurch gekennzeichnet, daß man während des Schrittes a) einen pH-Wert von 1,4 bis 2,0 einstellt.

3. Verfahren nach Anspruch 1 oder 2, dadurch gekennzeichnet, daß man die erste Feststofffraktion nach einer Verweilzeit von mindestens 2 Stunden abfiltriert.

4. Verfahren nach Anspruch 3, dadurch gekennzeichnet, daß man die erste Feststofffraktion nach einer Verweilzeit von 4 bis 6 Stunden abfiltriert.

5. Verfahren nach einem der Ansprüche 1 bis 4, dadurch gekennzeichnet, daß man den im Schritt b) abfiltrierten Niederschlag in Wasser aufschlämmt und so lange wäscht, bis sein Gehalt an P$_2$O$_5$ in Trockensubstanz weniger als 5 Gew.-% beträgt.

**Claims**

1. Process for after-treating sulfuric acid extraction residues, termed raffinates, originating from the extractive decontamination of crude phosphoric acid with the aid of an organic solvent in the presence of sulfuric acid, by reacting these raffinates with a calcium compound producing an alkaline reaction which comprises: preparing, from the raffinates, two separate solid matter fractions of different chemical composition, wherein

a)   a pH-value pf 1.2 to 2.0 is established in the watercontaining raffinates by adding the calcium compound thereto;
b)   the resulting precipitate consisting essentially of gypsum is filtered off as a first solid matter fraction and washed with water;
c)   the filtrate obtained and the wash water are made into a mixture, the latter is admixed with predetermined proportions of the calcium compound so as to have, after reaction, in the fully reacted filter cake a pH-value of 9 up to 12, determined in a 10 weight % aqueous suspension, and the resulting suspension is filtered upon establishment of a pH-value of 6 to 8; and
d)   the filter cake obtained consisting essentially of calcium phosphate, is separated as the second solid matter fraction and allowed to react.

2. Process as claimed in claim 1, wherein a pH-value of 1.4 up to 2.0 is established during step a).

3. Process as claimed in claim 1 or 2, wherein the first solid matter fraction is filtered off after a sojourn time of at least 2 hours.

4. Process as claimed in claim 3, wherein the first solid matter fraction is filtered off after a sojourn time of 4 to 6 hours.

5. Process as claimed in any of claims 1 to 4, wherein the precipitate filtered off in step b) is suspended in water and washed until its $P_2O_5$-content in dry substance is less than 5 weight %.

## Revendications

1. Procédé de post-traitement de résidus d'extraction contenant de l'acide sulfurique, dénommés raffinats, obtenus dans la purification par extraction de l'acide phosphorique brut à l'aide de solvants organiques en présence d'acide sulfurique, par réaction de ces raffinats avec des composés de calcium à réaction alcaline, caractérisé en ce que l'on prépare à partir des raffinats deux fractions de matières solides séparées de composition chimique différente, dans lequel

a) on établit dans les raffinats acides contenant de l'eau un pH de 1,2—2,0 par addition du composé de calcium;

b) on élimine par filtration comme première fraction de matière solide le précipité formé consistant essentiellement en gypse et on le lave à l'eau;

c) on réunit le filtrat obtenu avec l'eau de lavage pour obtenir un mélange, dans lequel on introduit le composé de calcium en proportions déterminées au préalable telles qu'il s'établisse, après réaction, dans le gâteau de filtration ayant réagi un pH de 9—12, mesuré dans une suspension aqueuse à 10% en poids, et on filtre la suspension formée dès l'établissement d'un pH de 6—8 et

d) on sépare comme seconde fraction de matière solide le gâteau de filtration obtenu consistant essentiellement en phosphate de calcium et on le laisse réagir.

2. Procédé selon la revendication 1, caractérisé en ce que l'on établit un pH de 1,4—2,0 pendant le stade a).

3. Procédé selon la revendication 1 ou 2, caractérisé en ce que l'on élimine par filtration la première fraction de matière solide après une durée de séjour d'au moins 2 heures.

4. Procédé selon la revendication 3, caractérisé en ce que l'on élimine par filtration la première fraction de matière solide après une durée de séjour de 4 à 6 heures.

5. Procédé selon l'une des revendications 1 à 4, caractérisé en ce que l'on met en suspension dans l'eau le précipité éliminé par filtration dans le stade b) et on le lave jusqu'à ce que sa teneur en $P_2O_5$ en matière sèche soit inférieure à 5% en poids.